# EUROPEAN PATENT SPECIFICATION

(11) **EP 2 127 198 B1**
(45) Date of publication and mention of the grant of the patent: **05.12.2012**
(21) Application number: 08736787.6
(22) Date of filing: 27.03.2008
(51) Int. Cl.: H04L 29/06, H04L 9/32, H04L 12/56, H04W 12/04, H04W 12/06

(54) **AUTHENTICATION AND ENCRYPTION PROTOCOL IN WIRELESS COMMUNICATIONS SYSTEM**
AUTHENTIFIZIERUNGS- UND VERSCHLÜSSELUNGSPROTOKOLL IN EINEM DRAHTLOSEN KOMMUNIKATIONSSYSTEM
PROTOCOLE D'AUTHENTIFICATION ET DE CRYPTAGE DANS UN SYSTÈME DE COMMUNICATION SANS FIL

(30) Priority: 28.03.2007 FI 20075201
(43) Date of publication of application: 02.12.2009
(73) Proprietor: TeliaSonera AB, 10663 Stockholm (SE)
(72) Inventor: KORHONEN, Jouni, FI-11100 Riihimäki (FI)
(74) Representative: Äkräs, Tapio Juhani
(86) International application number: PCT/FI2008/050138
(87) International publication number: WO 2008/116972

(56) References cited:
- WO-A1-2004/008715
- GB-A- 2 424 154
- AL-SHRAIDEH F: "Host Identity Protocol", NETWORKING, INTERNATIONAL CONFERENCE ON SYSTEMS AND INTERNATIONAL CONF ERENCE ON MOBILE COMMUNICATIONS AND LEARNING TECHNOLOGIES, 2006. ICN/I CONS/MCL 2006. INTERNATIONAL CONFERENCE ON MORNE, MAURITIUS 23-29 APRIL 2006, PISCATAWAY, NJ, USA,IEEE, 23 April 2006 (2006-04-23), pages 203-203, XP010914788, DOI: DOI:10.1109/ICNICONSMCL.2006.112 ISBN: 978-0-7695-2552-5
- RADIUS PROTOCOL WIKI PAGE: 'Wikimedia Foundation', [Online] 20 October 2006, XP008112495 Retrieved from the Internet: <URL:http://www.web.archive.org/web/2006102 0232045/http://www.en.wikipedia.org/wiki/RA DIUS>
- LAGANIER J. ET AL.: 'Host Identity Protocol (HIP) Rendezvous Extension' THE INTERNET WORKING GROUP RFC 5204, [Online] April 2008, XP015055253 Retrieved from the Internet: <URL:http://www.ietf.org/rfc/rfc5204.txt>
- MOSKOWITZ R. ET AL.: 'Host Identity Protocol (HIP) Architecture' THE INTERNET WORKING GROUP RFC 4423, [Online] May 2006, XP008112496 Retrieved from the Internet: <URL:http://www.ietf.org/rfc/rfc4423.txt>

## Description

### FIELD OF THE INVENTION

The present invention relates to an authentication and encryption protocol in a communications system.

### BACKGROUND OF THE INVENTION

Host identity protocol (HIP) provides a solution for separating the end-point identifier and locator roles of IP (Internet protocol) addresses. The HIP architecture introduces a new cryptographically based namespace, host identity (HI), and a new layer between the network layer and the transport layer. The new layer, which carries the host identity, is called a host layer. The host identity namespace is based on public keys which are typically, but not necessarily, self-generated.

The current Internet has two global namespaces, domain names and IP addresses. IP addresses are used as both topological locators and network interface identities. This dual role of the IP addresses limits the flexibility of the Internet architecture and makes mobility and IP address renumbering difficult. In particular, transport protocols, such as UDP (user datagram protocol) or TCP (transmission control protocol), are bound to IP addresses and disconnect when the address changes. The host identity protocol architecture defines a new global Internet namespace. The host identity namespace decouples the name and locator roles currently filled by IP addresses. According to HIP, the transport layer uses host identities instead of IP addresses as end-point names. At the same time, the network layer uses IP addresses as pure locators.

The host identity layer is added as a waist between the transport layer and the network layer of the protocol stack. Each HIP-enabled host has one or more host identifiers (HIs). The host identifier is a public key. The host identifier is represented by a 128-bit long identifier, a host identity tag (HIT). The host identity tag is constructed by applying a cryptographic hash function over a public key. In HIP, sockets are bound to HIs rather than IP addresses. IP addresses are used for routing packets. A network logon procedure based on HIP is disclosed in GB2424154.

HIP enables end-to-end security, mobility, multi-address multi-homing, and resistance to denial-of-service (DoS) attacks in a communications system. Therefore, one might wish to use HIP as a common generic key management and authentication protocol. However, a problem associated therewith is that current systems only enable HIP to be used for authenticating and traffic encryption of peer-to-peer connections. This is because in a larger system, each network node should know all necessary host identity tags and host identities. The only available solution would thus be to use static tables stored in the network nodes in order to associate HITs to corresponding security domains (REALMs). This would not be very practical.

### BRIEF DESCRIPTION OF THE INVENTION

An object of the present invention is thus to provide a method and an apparatus for implementing the method so as to solve the above problem. The object of the invention is achieved by a method, system, authenticator and server which are characterized by what is stated in the independent claims. Preferred embodiments of the invention are disclosed in the dependent claims.

The invention relates to user authentication in a wireless access network. The invention also relates to utilizing host identity protocol HIP. The access network comprises an authenticator node which receives a data packet, including a host identity tag of a user terminal. On the basis of the host identity tag, the authenticator node requests information on a home network of the user terminal from a name server. As the name server provides information on the home network of the user terminal, the authenticator is able to transmit an authentication request, including the host identity tag, to an authentication server of the home network. The server receives the authentication request, checks the host identity tag, and if the host identity tag can be allowed by the server, an authentication response is transmitted to the authenticator node. Then, a host identity tag of the authenticator node is provided to the user terminal.

An advantage of the invention is that it allows the host identity protocol (HIP) to be used for authenticating and encrypting of connections also other than peer-to-peer connections. It enables HIP to be used as a common authentication and key management protocol in a communications network, for example, in a wireless local area network WLAN. The invention allows the mapping of an initiator host identity tag to information that current network architectures are able to respond to.

### BRIEF DESCRIPTION OF THE DRAWINGS

In the following the invention will be described in greater detail by means of preferred embodiments with reference to the attached drawings, in which
Figure 1 illustrates a communications system according to the present solution;
Figure 2 illustrates signalling according to the present solution;
Figure 3 is a flow chart illustrating the functioning of a network authenticator according to the present solution;
Figure 4 is a flow chart illustrating the functioning of an authentication, authorisation and accounting server according to the present solution.

### DETAILED DESCRIPTION OF THE INVENTION

In the following, embodiments of the invention will be described with reference to a wireless communications system, such as WLAN. This invention is not, however, meant to be restricted to these embodiments. Consequently, the invention may be applied to any wireless or mobile communications system, such UMTS capable of providing a packet switched radio service. Especially the specifications of WLAN and 3rd generation (3G) mobile communications systems advance rapidly. This may require additional changes to the invention. For this reason, the terminology and the expressions used should be interpreted in their broadest sense since they are meant to illustrate the invention and not to restrict it. The relevant inventive aspect is the functionality concerned, not the network element or equipment where it is executed.

A host identifier HI refers to a cryptographic key. It is a public key of an asymmetric key-pair. A host has at least one unique host identity. The host identity, and the corresponding host identifier, can be either public (e.g. published in the DNS) or unpublished. When HIP is used the actual payload traffic between two HIP hosts is typically protected utilizing a secured IP (IPsec). The host identities are used for creating IPsec security associations SA and for authenticating the hosts. The host identity enables decoupling of inter-networking and transport layers. This allows an independent evolution of the two layers. Another feature is host authentication. Because the host identifier is a public key, it can be used for authentication in security protocols like IPsec.

A host identity tag (HIT) is a 128-bit representation for a host identity. It is created by taking a cryptographic hash over the corresponding host identifier. In the HIP packets, the HITs identify the sender and the recipient of a packet. A HIT is unique in the whole IP universe as long as it is being used. In the HIP architecture, the host identifiers take the role of end-point identifiers.

Host identity protocol HIP provides a binding of transport layer protocols, in which the transport layer associations, i.e. the TCP connections and UDP associations, are no longer bound to IP addresses but to host identities.

A naming authority pointer (NAPTR) is a DNS record, supporting regular expression based rewriting. Several NAPTR records can be chained together creating URI re-writing rules. A record can go through any number of rewrites before reaching a terminal condition. For example, after translating a telephone number +1 770 555 1212 into an URI 2.1.2.1.5.5.5.0.7.7.1.e164.arpa, it is transformed by using rewrite rules found in NAPTR records. A bind configuration for the records returned from a query for 2.1.2.1.5.5.5.0.7.7.1.e164.arpa might then appear as follows:
$ORIGIN 2.1.2.1.5.5.5.0.7.7.1.e164.arpa.
   IN NAPTR 100 10 "u" "sip+E2U" "!^.*$!sip:information@pbx.example.com!i".
   IN NAPTR 102 10 "u" "smtp+E2U" "!^.*$!mailto:information@example.com!i".

Telephone number mapping (ENUM) is a suite of protocols for unifying the telephone numbering system E.164 with the Internet addressing system DNS by using an indirect lookup method to obtain NAPTR records. The records are stored in a DNS database. ENUM is based on a public name server system offering global reachability. By means of ENUM, end users and companies may themselves manage their communication, and, for example, receive telephone calls via the Internet, the calls being made with telephone numbers.

A resource record RR refers to a DNS resource record, which is a unit of data in the domain name system, defining attributes for a domain name. The attribute can be, for example, an IP address, a string of text, or a mail route.

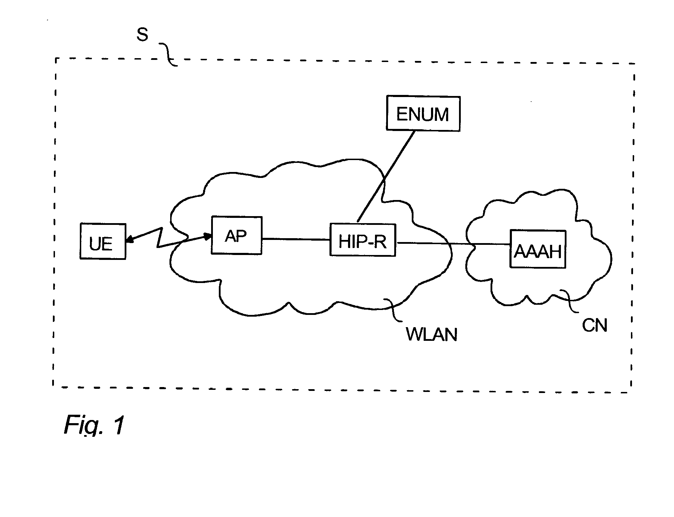

Figure 1 illustrates a communications system S according to an embodiment of the present solution. Figure 1 shows a simplified version of the network architecture, only illustrating components that are essential to the invention, even though those skilled in the art naturally know that a general wireless or mobile communications system also comprises other functions and structures, which do not have to be described in more detail herein.

In Figure 1, the communications system S comprises a wireless access network WLAN and a core network CN. The access network WLAN is, for example, a wireless local area network, and it comprises a network authenticator HIP-R (i.e. a HIP responder) with which a user terminal UE may communicate via an access point AP when UE is on the coverage area of AP. The access point AP may also be referred to as a base station. The user terminal UE may also be referred to as a HIP initiator (HIP-I), and it may comprise any wireless portable user device, such as a laptop or a mobile station, capable of communicating with AP. The core network CN illustrates a "home network" of the user terminal UE, and it comprises an authentication, authorisation and accounting server AAAH with which the HIP responder may communicate. The HIP responder may also communicate with a name server ENUM. A radio link between AP and UE is implemented by utilizing a radio technology, such as WLAN.

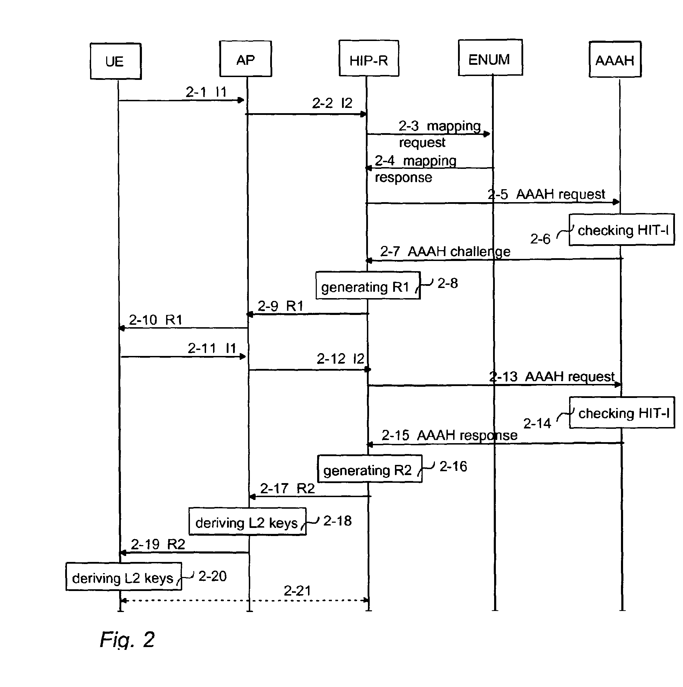

Figure 2 illustrates signalling according to an embodiment of the present solution. At first, a first initiator packet I1 comprising a host identity tag HIT-I of the HIP initiator UE is transmitted 2-1 from the user terminal UE (i.e. a HIP initiator) to a WLAN access point AP. The I1 packet is forwarded 2-2 by the access point AP to a HIP responder HIP-R (i.e. WLAN authenticator). On the basis of I1, the HIP responder requests information on a home network of the user terminal by transmitting, in a mapping request (DNS request) 2-3, the host identity tag HIT-I to a global name server ENUM. In a mapping response 2-4, information on the home network (e.g. the REALM) CN is transmitted from ENUM to HIP-R. On the basis of the mapping response, a first authentication request 2-5 is transmitted from HIP-R to an authentication, authorisation and accounting server AAAH of the home network, the request 2-5 indicating HIT-I. The request 2-5 may also include a host identity tag of the HIP responder, i.e. HIT-R. As the first authentication request is received 2-6 in AAAH, AAAH is arranged to check 2-6 whether HIT-I is valid or not. If HIT-I is found to be valid, an authentication challenge 2-7 is transmitted from AAAH to HIP-R. On the basis of the authentication challenge, HIP-R generates 2-8 a first responder packet R1 and transmits 2-9, 2-10 it, via AP, to the user terminal UE. The first responder packet R1 may include information on the responder host identity tag HIT-R. After receiving message 2-10 in UE, UE creates and transmits 2-11 a second initiator packet 12, via AP, to HIP-R. On the basis of 12, a second authentication request 2-13 is transmitted from HIP-R to AAAH, the request 2-13 indicating HIT-I. The request 2-13 may also include the responder host identity tag HIT-R. As the second authentication request is received 2-14 in AAAH, AAAH is arranged to check 2-14 whether HIT-I is valid or not. If HIT-I is found to be valid, an authentication response 2-15 is transmitted from AAAH to HIP-R. On the basis of the authentication response, HIP-R generates 2-16 a second responder packet R2 and transmits 2-17 it to AP. The second responder packet R2 includes information on the responder host identity tag HIT-R. On the basis of R2, layer-2 (L2) cryptographic keys are derived in AP in step 2-18. At this point, a connection between UE and HIP-R has thus been negotiated. In message 2-19, the second responder packet R2 is transmitted to UE. On the basis of R2, L2 cryptographic keys are derived in UE in step 2-20. After that, the connection 2-21 between UE and HIP-R is secured.

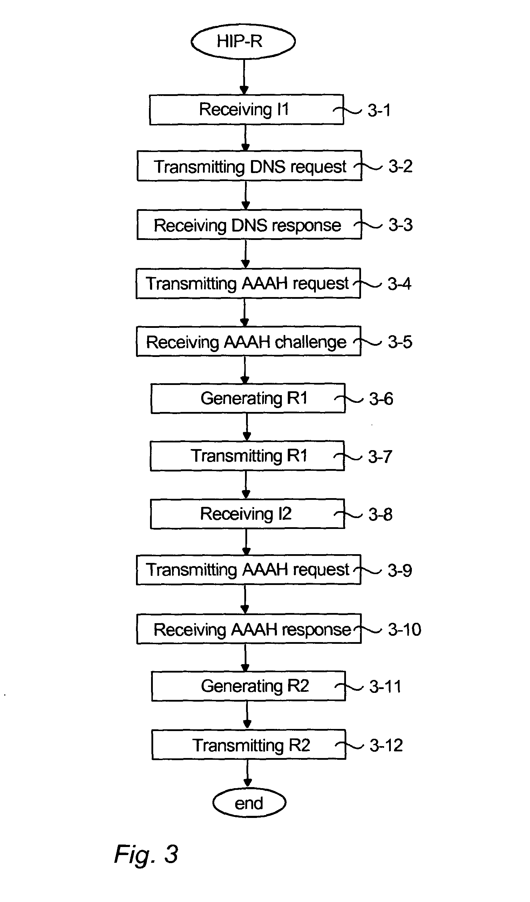

Figure 3 illustrates the functioning of a network authenticator (i.e. a HIP responder HIP-R) according to an embodiment of the present solution. In step 3-1, a first initiator packet I1 comprising a host identity tag HIT-I of the HIP initiator UE is received from a WLAN access point AP. On the basis of I1, the HIP responder requests 3-2 information on a home network of the user terminal UE by transmitting, in a mapping request (DNS request), the host identity tag HIT-I to a global name server ENUM. A mapping response including information on the home network (e.g. the REALM) is received 3-3 from ENUM. On the basis of the mapping response, a first authentication request is transmitted 3-4 to an authentication, authorisation and accounting server AAAH of the home network CN, the request indicating HIT-I. The request may also include a host identity tag of the HIP responder, i.e. HIT-R. After that, an authentication challenge is received 3-5 from AAAH. On the basis of the authentication challenge, HIP-R generates 3-6 a first responder packet R1 and transmits 3-7 it to AP. The first responder packet R1 may include information on the responder host identity tag HIT-R. In step 3-8, a second initiator packet I2 is received from AP. On the basis of 12, a second authentication request is transmitted 3-9 from HIP-R to AAAH, the request indicating HIT-I. The request may also include the responder host identity tag HIT-R. After that, an authentication response is received 3-10 from AAAH. On the basis of the authentication response, HIP-R generates 3-11 a second responder packet R2 and transmits 3-12 it to AP. The second responder packet R2 includes information on the responder host identity tag HIT-R.

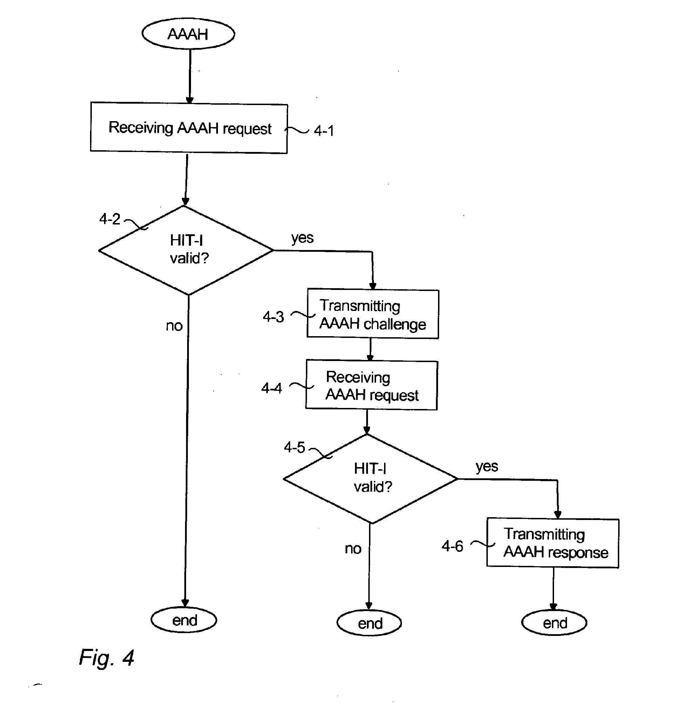

Figure 4 illustrates the functioning of an authentication, authorisation and accounting server AAAH of a home network CN of a user terminal UE, according to an embodiment of the present solution. At first, a first authentication request is received from HIP-R, the request indicating a host identity tag HIT-I of the user terminal. The request may also include a host identity tag HIT-R of the HIP responder. As the first authentication request is received in AAAH, AAAH is arranged to check 4-2 whether HIT-I is valid or not. If HIT-I is found to be valid, an authentication challenge is transmitted 4-3 from AAAH to HIP-R. If HIT-I is not found to be valid, the process may end or a message (not shown) may be transmitted to HIP-R, informing HIP-R of an invalid HIT-I. In step 4-4, a second authentication request is received from HIP-R, the request indicating HIT-I. The request may also include the responder host identity tag HIT-R. As the second authentication request is received 4-4 in AAAH, AAAH is arranged to check 4-5 whether HIT-I is valid or not. If HIT-I is found to be valid, an authentication response is transmitted 4-6 from AAAH to HIP-R.

The present invention enables a network node (e.g. a HIP responder) to acquire information on the host identity tags and the host identities, without the network node having to maintain information on all host identity tags and/or host identities. The present invention thus allows a dynamic association of host identity tags (HIT) to corresponding REALMs by utilizing HIP. By means of the security domain (REALM), a home network of a calling user terminal can be located, as the home network is able to recognize the host identity tag and the host identifier used. By means of the invention, a HIP responder is able to associate the host identity tag to a REALM. Information on the host identity tag and host identity of the user terminal is stored in the home network. For example, if HIP is used in WLAN to replace an 802.1X protocol, the HIP responder has to be able to find, on the basis of the responder HIT, the home network of the HIP initiator (i.e. client), and the AAA server from where the HIP responder may retrieve the information needed to perform a base exchange according to the HIP protocol. HIT may be a non-routed Ipv6-like 128-bit identifier according to Orchid definitions. The present invention defines a scalable solution for a roaming environment for associating HIT to REALM and thereby to any server/service. In the present solution, the HIP roles are mapped on top of the WLAN architecture such that a HIP initiator corresponds to a WLAN station/supplicant, a WLAN base station corresponds to any pass-through WLAN access point, a HIP responder corresponds to a WLAN authenticator, and AAA (authentication, authorisation and accounting) corresponds, for example, to an AAA&EAP (extensible authentication protocol) server.

The idea of the invention is to provide a dynamic HIP responder configuration to associate HIT to REALM. In the invention, in connection with a I1 packet, the HIP responder is able to find the correct REALM, in order to find AAAH. In the following, REALM is represented by "@aaah". In the invention, the HIP responder utilizes DNS. Each HIT is provisioned into ENUM-DNS, and the association HIT->REALM is performed by means of an ENUM-DNS query. The query returns an NAPTR-RR with a terminal flag "s" and an address by means of which an SRV-RR can be interrogated in order to find AAAH. An example of a NAPTR solution may be as follows:

| $ORIGIN 0.1.2.3.4.5.6.7.8.9.0.1.2.3.4.5.6.7.8.9.0.a.b.c.d.e.f.0.1.2.3.4.5.e164.arpa. | | | | | | |
|---|---|---|---|---|---|---|
| ;; | order | pref | flags | service | regexp | replacement |
| IN NAPTR | 100 | 10 | "s" | "AAA+D2T" | "" | aaa.operator.com. |

The above example defines following aspects to HIT 0x543210fedcba98765432109876543210: SRV-RR in domain aaa.operator.com is interrogated, AAA server is requested, the service is on diameter-TCP.

However, the fact that the top level domain (TLD) .e164.arpa. is already in use may cause collisions in the system. Therefore, a top level domain (TLD) other than e164.arpa. may be used. For example, a fictitious TLD of .hit.arpa. could be used.

In another example, the system is configured to utilize the existing .e164.arpa. TLD in a way that is backwards compatible. This requires that, for HIP, a "country code" of its own is reserved from the E.164 space. The country code could be e.g. +668. Thus, with the .e164.arpa. TLD, a TLD of .8.6.6.e164.arpa. reserved for HIP is obtained.

NAPTR-ORIGIN could also be of a type other than those used by ENUM. NAPTR service could also be other than "AAA+D2T" and "AAA+D2S" defined by RFC3588 diameter protocol. It could be, for example, "AAA+R2T" and "AAA+R2S", if one wishes to use a RADIUS protocol instead of diameter.

The invention enhances HIP by introducing a possibility to check information on a user. The idea is to check whether a user defined by a host identity tag actually exists in the system, and/or whether the user has a permission to use the service and/or the network in question. Here it is assumed that the WLAN access network itself is reliable. The invention allows, for example, network operators to check the data security of their clients, by using HIP. It enables the end-points to exchange information on their host identity tags in order to enable reliable data communication between them.

According to an embodiment, the present solution is not restricted to the use of HIP, but also other technologies may be used instead or in addition to HIP.

According to an embodiment, the mapping request comprises a telephone number mapping - domain name server request ENUM-DNS related to a created top level domain or a HIP-specific E.164 country code reserved for HIP.

The items and steps shown in Figures 2, 3 and 4 are simplified, and only aim at describing the idea of the invention. Other items may be used and/or other functions may be carried out between the steps. The items only serve as examples and they may only contain some of the information mentioned above. The items may also include other information, and the titles may deviate from those given above. Instead of or in addition to a network authenticator or an authentication, authorisation and accounting server, the above described operations may be performed in any other element of a communications system.

In addition to prior art means, a system, networks or network nodes that implement the functionality of the invention comprise means for processing information relating to authentication and encryption in a manner described above. Existing network nodes and user terminals comprise processors and memory that can be utilized in the operations of the invention. Any changes necessary for implementing the invention may be carried out using supplements or updates of software routines and/or routines included in application specific integrated circuits (ASIC) and/or programmable circuits, such as EPLDs (Electrically Programmable Logic Device) or FPGAs (Field Programmable Gate Array).

It will be obvious to a person skilled in the art that, as the technology advances, the inventive concept can be implemented in various ways. The invention and its embodiments are not limited to the examples described above but may vary within the scope of the claims.

## Claims

1. A method for authenticating a user terminal (UE) in a communications system (S), the system (S) comprising a network authenticator (HIP-R) of a wireless access network (WLAN), wherein
the network authenticator (HIP-R) receives at least one initiator packet (2-2, 2-12) transmitted by the user terminal (UE) via an access point (AP), the packet including a host identity tag of the user terminal (UE) and **characterised by** the following steps:
transmitting, on the basis of the initiator packet, a mapping request (2-3) from the network authenticator (HIP-R) to a name server (ENUM);
receiving, in the network authenticator (HIP-R), a mapping response (2-4) from the name server (ENUM), the mapping response (2-4) including information on a home network server (AAAH) of the user terminal (UE);
transmitting, from the network authenticator (HIP-R) to the home network server (AAAH), an authentication request (2-5, 2-13) on the basis of the mapping response (2-4), the authentication request (2-5, 2-13) further indicating the host identity tag of the user terminal (UE); and
checking (2-6, 2-14), in the home network server (AAAH), the host identity tag of the user terminal (UE);
wherein if the host identity tag of the user terminal (UE) is allowable to the home network server (AAAH), the method comprises
transmitting an authentication response (2-7, 2-15) from the home network server (AAAH) to the network authenticator (HIP-R);
generating (2-8, 2-16), in the network authenticator (HIP-R), at least one responder packet on the basis of the authentication response (2-7, 2-15); and
transmitting, to the user terminal (UE), the at least one responder packet (2-10, 2-19) including a host identity tag of the network authenticator (HIP-R).

2. A method according to claim 1, **characterized by** using the host identity tag of the user terminal (UE) and the host identity tag of the network authenticator (HIP-R) for authenticating the user terminal (UE).

3. A method according to claim 1 or 2, **characterized by** utilizing a HIP protocol for authenticating the user terminal (UE) in a wireless local area network WLAN.

4. A method according to claim 1, 2 or 3, **characterized in that** host identity protocol HIP is applied between the user terminal (UE) and the network authenticator (HIP-R).

5. A method according to any one of claims 1 to 4, **characterized in that** authentication, authorisation and accounting protocol AAA is applied between the network authenticator (HIP-R) and the home network server (AAAH).

6. A method according to any one of claims 1 to 5, **characterized by** including a HIT responder in the network authenticator (HIP-R) and/or a HIT initiator in the user terminal (UE).

7. A method according to any of one claims 1 to 6, **characterized by** the mapping request (2-3) comprising a telephone number mapping - domain name server request ENUM-DNS related to a created top level domain or a HIP-specific E.164 country code reserved for HIP.

8. A method according to any one of claims 1 to 6, **characterized by** the mapping request (2-3) including a server resource record request SRV-RR.

9. A method according to any one of claims 1 to 8, **characterized by** the mapping response (2-4) including a naming authority pointer NATPR.

10. A method according to any one of claims 1 to 9, **characterized in that** it comprises associating a host identity tag HIT of the user terminal (UE) to a security domain REALM for finding an authentication server (AAAH) of the home network (CN) of the user terminal (UE).

11. A communications system (S) comprising
a user terminal (UE),
a network authenticator (HIP-R) of a wireless access network (WLAN), and
a home network server (AAAH) of the user terminal (UE),
wherein the system (S) is configured to
transmit, from the user terminal (UE) to the network authenticator (HIP-R), at least one initiator packet including a host identity tag of the user terminal (UE) and **characterized in that** it is configured to:
transmit, on the basis of a first initiator packet transmitted by the user terminal (UE), a mapping request from the network authenticator (HIP-R) to a name server (ENUM);
receive, in the network authenticator (HIP-R), a mapping response from the name server (ENUM), the mapping response including information on the home network server (AAAH) of the user terminal (UE);
transmit, from the network authenticator (HIP-R) to the home network server (AAAH), at least one authentication request on the basis of said information, the authentication request indicating the host identity tag of the user terminal (UE); and
check, in the home network server (AAAH), the host identity tag of the user terminal (UE);
wherein if the host identity tag is allowable to the home network server (AAAH), the system (S) is configured to
transmit at least one authentication response from the home network server (AAAH) to the network authenticator (HIP-R);
generate, in the network authenticator (HIP-R), at least one responder packet on the basis of the authentication response, the packet including a host identity tag of the network authenticator (HIP-R); and
transmit, from the network authenticator (HIP-R) to the user terminal (UE), the at least one responder packet.

12. A communications system (S) according to claim 11, **characterized in that** it is arranged to use the host identity tag of the user terminal (UE) and the host identity tag of the network authenticator (HIP-R) for authenticating the user terminal (UE).

13. A communications system (S) according to claim 11 or 12, **characterized in that** it is arranged to associate a host identity tag HIT to a security domain REALM for finding an authentication server (AAAH) of the home network (CN) of the user terminal (UE).

## Patentansprüche

1. Verfahren zum Authentifizieren eines Benutzerendgeräts (UE) in einem Kommunikationssystem (S), wobei das System (S) eine Netzwerk-Authentifizierungseinheit (HIP-R) eines Netzwerks mit drahtlosem Zugang (WLAN) umfasst, wobei:
die Netzwerk-Authentifizierungseinheit (HIP-R) mindestens ein Initiatorpaket (2-2, 2-12) empfängt, welches von dem Benutzerendgerät (UE) über einen Zugangspunkt (AP) gesendet wird, wobei das Paket ein Host-Identitäts-Kennzeichen des Benutzerendgeräts (UE) umfasst,
und wobei das Verfahren durch die folgenden Schritte gekennzeichnet ist:
Senden einer Umsetzungsanforderung (2-3) auf der Grundlage des Initiatorpakets von der Netzwerk-Authentifizierungseinheit (HIP-R) an einen Namenserver (ENUM);
Empfangen einer Umsetzungsantwort (2-4) von dem Namenserver (ENUM) in der Netzwerk-Authentifizierungseinheit (HIP-R), wobei die Umsetzungsantwort (2-4) Informationen über einen Hausnetzwerk-Server (AAAH) des Benutzerendgeräts (UE) umfasst;
Senden einer Authentifizierungsanforderung (2-5, 2-13) auf der Grundlage der Umsetzungsantwort (2-4) von der Netzwerk-Authentifizierungseinheit (HIP-R) an den Hausnetzwerk-Server (AAAH), wobei die Authentifizierungsanforderung (2-5, 2-13) ferner das Host-Identitäts-Kennzeichen des Benutzerendgeräts (UE) anzeigt; und
Überprüfen (2-6, 2-14) des Host-Identitäts-Kennzeichens des Benutzerendgeräts (UE) im Hausnetzwerk-Server (AAAH);
wobei, wenn das Host-Identitäts-Kennzeichen des Benutzerendgeräts (UE) für den Hausnetzwerk-Server (AAAH) zulässig ist, das Verfahren das Folgende umfasst:
Senden einer Authentifizierungsantwort (2-7, 2-15) von dem Hausnetzwerk-Server (AAAH) an die Netzwerk-Authentifizierungseinheit (HIP-R);
Erzeugen (2-8, 2-16) mindestens eines Antwortpakets auf der Grundlage der Authentifizierungsantwort (2-7, 2-15) in der Netzwerk-Authentifizierungseinheit (HIP-R) und
Senden des mindestens einen Antwortpakets (2-10, 2-19), welches ein Host-Identitäts-Kennzeichen der Netzwerk-Authentifizierungseinheit (HIP-R) umfasst, an das Benutzerendgerät (UE).

2. Verfahren nach Anspruch 1, **dadurch gekennzeichnet, dass** zum Authentifizieren des Benutzerendgeräts (UE) das Host-Identitäts-Kennzeichen des Benutzerendgeräts (UE) und das Host-Identitäts-Kennzeichen der Netzwerk-Authentifizierungseinheit (HIP-R) verwendet wird.

3. Verfahren nach Anspruch 1 oder 2, **dadurch gekennzeichnet, dass** zum Authentifizieren des Benutzerendgeräts (UE) in einem drahtlosen lokalen Netzwerk (WLAN) ein HIP-Protokoll angewendet wird.

4. Verfahren nach Anspruch 1, 2 oder 3, **dadurch gekennzeichnet, dass** zwischen dem Benutzerendgerät (UE) und der Netzwerk-Authentifizierungseinheit (HIP-R) das Host-Identity-Protocol HIP angewendet wird.

5. Verfahren nach einem der Ansprüche 1 bis 4, **dadurch gekennzeichnet, dass** zwischen der Netzwerk-Authentifizierungseinheit (HIP-R) und dem Hausnetzwerk-Server (AAAH) das Authentication, Authorisation and Accounting Protocol AAA angewendet wird.

6. Verfahren nach einem der Ansprüche 1 bis 5, **dadurch gekennzeichnet, dass** es einen HIT-Antwortsender in der Netzwerk-Authentifizierungseinheit (HIP-R) und/oder einen HIT-Initiator in dem Benutzerendgerät (UE) umfasst.

7. Verfahren nach einem der Ansprüche 1 bis 6, **dadurch gekennzeichnet, dass** die Umsetzungsanforderung (2-3) eine Telefonnummern-Umsetzungs-Domain-Namenserver-Anforderung ENUM-DNS umfasst, welche auf eine erzeugte Top-Level-Domain oder einen HIP-spezifischen E.164-Ländercode bezogen ist, der für das HIP reserviert ist.

8. Verfahren nach einem der Ansprüche 1 bis 6, **dadurch gekennzeichnet, dass** die Umsetzungsanforderung (2-3) eine Server-Resource-Record-Anforderung SRV-RR umfasst.

9. Verfahren nach einem der Ansprüche 1 bis 8, **dadurch gekennzeichnet, dass** die Umsetzungsantwort (2-4) einen Naming Authority Pointer NATPR umfasst.

10. Verfahren nach einem der Ansprüche 1 bis 9, **dadurch gekennzeichnet, dass** es das Zuordnen des Host-Identitäts-Kennzeichens HIT des Benutzerendgeräts (UE) zu einer Sicherheitsdomäne REALM umfasst, um einen Authentifizierungs-Server (AAAH) des Hausnetzwerks (CN) des Benutzerendgeräts (UE) zu finden.

11. Kommunikationssystem (S), welches das Folgende umfasst:
ein Benutzerendgerät (UE),
eine Netzwerk-Authentifizierungseinheit (HIP-R) eines Netzwerks mit drahtlosem Zugang (WLAN) und
einen Hausnetzwerk-Server (AAAH) des Benutzerendgeräts (UE),
wobei das System (S) für das Folgende konfiguriert ist:
Senden mindestens eines Initiatorpakets, welches ein Host-Identitäts-Kennzeichen des Benutzerendgeräts (UE) umfasst, von dem Benutzerendgerät (UE) an die Netzwerk-Authentifizierungseinheit (HIP-R)
und **dadurch gekennzeichnet ist, dass** es für das folgende konfiguriert ist:
Senden einer Umsetzungsanforderung von der Netzwerk-Authentifizierungseinheit (HIP-R) an einen Namenserver (ENUM) auf der Grundlage eines ersten von dem Benutzerendgerät (UE) gesendeten Initiatorpakets;
Empfangen einer Umsetzungsantwort von dem Namenserver (ENUM) in der Netzwerk-Authentifizierungseinheit (HIP-R), wobei die Umsetzungsantwort Informationen über den Hausnetzwerk-Server (AAAH) des Benutzerendgeräts (UE) umfasst;
Senden mindestens einer Authentifizierungsanforderung von der Netzwerk-Authentifizierungseinheit (HIP-R) an den Hausnetzwerk-Server (AAAH) auf der Grundlage der Informationen, wobei die Authentifizierungsanforderung das Host-Identitäts-Kennzeichen des Benutzerendgeräts (UE) anzeigt; und
Überprüfen des Host-Identitäts-Kennzeichens des Benutzerendgeräts (UE) in dem Hausnetzwerk-Server (AAAH);
wobei, wenn das Host-Identitäts-Kennzeichen für den Hausnetzwerk-Server (AAAH) zulässig ist, das System für das Folgende konfiguriert ist:
Senden mindestens einer Authentifizierungsantwort von dem Hausnetzwerk-Server (AAAH) an die Netzwerk-Authentifizierungseinheit (HIP-R);
Erzeugen mindestens eines Antwortpakets in der Netzwerk-Authentifizierungseinheit (HIP-R) auf der Grundlage der Authentifizierungsantwort, wobei das Paket ein Host-Identitäts-Kennzeichen der Netzwerk-Authentifizierungseinheit (HIP-R) umfasst; und
Senden des mindestens einen Antwortpakets von der Netzwerk-Authentifizierungseinheit (HIP-R) an das Benutzerendgerät (UE).

12. Kommunikationssystem (S) nach Anspruch 11, **dadurch gekennzeichnet, dass** es dafür eingerichtet ist, zum Authentifizieren des Benutzerendgeräts (UE) das Host-Identitäts-Kennzeichen des Benutzerendgeräts (UE) und das Host-Identitäts-Kennzeichen der Netzwerk-Authentifizierungseinheit (HIP-R) zu verwenden.

13. Kommunikationssystem (S) nach Anspruch 11 oder 12, **dadurch gekennzeichnet, dass** es dafür eingerichtet ist, einer Sicherheitsdomäne REALM ein Host-Identitäts-Kennzeichen HIT zuzuordnen, um einen Authentifizierungs-Server (AAAH) des Hausnetzwerks (CN) des Benutzerendgeräts (UE) zu finden.

## Revendications

1. Procédé d'authentification d'un terminal d'utilisateur (UE) dans un système de communication (S), le système (S) comprenant un authentificateur de réseau (HIP-R) d'un réseau d'accès sans fil (WLAN), dans lequel
l'authentificateur de réseau (HIP-R) reçoit au moins un paquet initiateur (2-2, 2-12) transmis par le terminal d'utilisateur (UE) par l'intermédiaire d'un point d'accès (AP), le paquet incluant une étiquette d'identité d'hôte du terminal d'utilisateur (UE),
et **caractérisé par** les étapes suivantes :
la transmission, sur la base du paquet initiateur, d'une demande de mappage (2-3) de l'authentificateur de réseau (HIP-R) à un serveur de nom (ENUM) ;
la réception, dans l'authentificateur de réseau (HIP-R), d'une réponse de mappage (2-4) du serveur de nom (ENUM), la réponse de mappage (2-4) incluant des informations sur un serveur de réseau domestique (AAAH) du terminal d'utilisateur (UE) ;
la transmission, de l'authentificateur de réseau (HIP-R) au serveur de réseau domestique (AAAH), d'une demande d'authentification (2-5, 2-13) sur la base de la réponse de mappage (2-4), la demande d'authentification (2-5, 2-13) indiquant en outre l'étiquette d'identité d'hôte du terminal d'utilisateur (UE) ; et
la vérification (2-6, 2-14), dans le serveur de réseau domestique (AAAH), de l'étiquette d'identité d'hôte du terminal d'utilisateur (UE) ;
dans lequel, si l'étiquette d'identité d'hôte du terminal d'utilisateur (UE) est admissible dans le serveur de réseau domestique (AAAH), le procédé comprend
la transmission d'une réponse d'authentification (2-7, 2-15) du serveur de réseau domestique (AAAH) à l'authentificateur de réseau (HIP-R) ;
la génération (2-8, 2-16), dans l'authentificateur de réseau (HIP-R), d'au moins un paquet répondeur sur la base de la réponse d'authentification (2-7, 2-15) ; et
la transmission, au terminal d'utilisateur (UE), de l'au moins un paquet répondeur (2-10, 2-19) incluant une étiquette d'identité d'hôte de l'authentificateur de réseau (HIP-R).

2. Procédé selon la revendication 1, **caractérisé par** l'utilisation de l'étiquette d'identité d'hôte du terminal d'utilisateur (UE) et de l'étiquette d'identité d'hôte de l'authentificateur de réseau (HIP-R) pour authentifier le terminal d'utilisateur (UE).

3. Procédé selon la revendication 1 ou 2, **caractérisé par** l'utilisation d'un protocole HIP pour authentifier le terminal d'utilisateur (UE) dans un réseau local sans fil (WLAN).

4. Procédé selon la revendication 1, 2 ou 3, **caractérisé en ce que** le protocole d'identité d'hôte (HIP) est appliqué entre le terminal d'utilisateur (UE) et l'authentificateur de réseau (HIP-R).

5. Procédé selon l'une quelconque des revendications 1 à 4, **caractérisé en ce que** le protocole d'authentification, d'autorisation et de comptabilisation (AAA) est appliqué entre l'authentificateur de réseau (HIP-R) et le serveur de réseau domestique (AAAH).

6. Procédé selon l'une quelconque des revendications 1 à 5, **caractérisé par** l'inclusion d'un répondeur HIT dans l'authentificateur de réseau (HIP-R) et/ou d'un initiateur HIT dans le terminal d'utilisateur (UE).

7. Procédé selon l'une quelconque des revendications 1 à 6, **caractérisé en ce que** la demande de mappage (2-3) comprend une demande de mappage de numéro de téléphone et de serveur de nom de domaine (ENUM-DNS) liée à un domaine de niveau supérieur créé ou à un code de pays E.164 spécifique à HIP réservé pour HIP.

8. Procédé selon l'une quelconque des revendications 1 à 6, **caractérisé en ce que** la demande de mappage (2-3) comprend une demande d'enregistrement de ressource de serveur (SRV-RR).

9. Procédé selon l'une quelconque des revendications 1 à 8, **caractérisé en ce que** la réponse de mappage (2-4) inclut un pointeur d'autorité de nommage (NATPR).

10. Procédé selon l'une quelconque des revendications 1 à 9, **caractérisé en ce qu'**il comprend l'association d'une étiquette d'identité d'hôte (HIT) du terminal d'utilisateur (UE) à un domaine de sécurité (REALM) pour trouver un serveur d'authentification (AAAH) du réseau domestique (CN) du terminal d'utilisateur (UE).

11. Système de communication (S) comprenant
un terminal d'utilisateur (UE),
un authentificateur de réseau (HIP-R) d'un réseau local sans fil (WLAN), et
un serveur de réseau domestique (AAAH) du terminal d'utilisateur (UE),
dans lequel le système (S) est configuré pour
transmettre, du terminal d'utilisateur (UE) à l'authentificateur de réseau (HIP-R), au moins un paquet initiateur incluant une étiquette d'identité d'hôte du terminal d'utilisateur (UE),
et **caractérisé en ce qu'**il est configuré pour
transmettre, sur la base d'un premier paquet initiateur transmis par le terminal d'utilisateur (UE), une demande de mappage de l'authentificateur de réseau (HIP-R) à un serveur de nom (ENUM) ;
recevoir, dans l'authentificateur de réseau (HIP-R), une réponse de mappage du serveur de nom (ENUM), la réponse de mappage incluant des informations sur le serveur de réseau domestique (AAAH) du terminal d'utilisateur (UE) ;
transmettre, de l'authentificateur de réseau (HIP-R) au serveur de réseau domestique (AAAH), au moins une demande d'authentification sur la base desdites informations, la demande d'authentification indiquant l'étiquette d'identité d'hôte du terminal d'utilisateur (UE) ; et
vérifier, dans le serveur de réseau domestique (AAAH), l'étiquette d'identité d'hôte du terminal utilisateur (UE) ;
dans lequel si l'étiquette d'identité d'hôte est admissible dans le serveur de réseau domestique (AAAH), le système (S) est configuré pour
transmettre au moins une réponse d'authentification du serveur de réseau domestique (AAAH) à l'authentificateur de réseau (HIP-R) ;
générer, dans l'authentificateur de réseau (HIP-R), au moins un paquet répondeur sur la base de la réponse d'authentification, le paquet incluant une étiquette d'identité d'hôte de l'authentificateur de réseau (HIP-R) ; et
transmettre, de l'authentificateur de réseau (HIP-R) au terminal d'utilisateur (UE), l'au moins un paquet répondeur.

12. Système de communication (S) selon la revendication 11, **caractérisé en ce qu'**il est agencé pour utiliser l'étiquette d'identité d'hôte du terminal d'utilisateur (UE) et l'étiquette d'identité d'hôte de l'authentificateur de réseau (HIP-R) pour authentifier le terminal d'utilisateur (UE).

13. Système de communication (S) selon la revendication 11 ou 12, **caractérisé en ce qu'**il est agencé pour associer une étiquette d'identité d'hôte (HIT) à un domaine de sécurité (REALM) pour trouver un serveur d'authentification (AAAH) du réseau domestique (CN) du terminal d'utilisateur (UE).
